# EUROPÄISCHE PATENTSCHRIFT

(11) **EP 2 018 981 B1**
(45) Veröffentlichungstag und Bekanntmachung des Hinweises auf die Patenterteilung: **24.11.2010**
(21) Anmeldenummer: 08013173.3
(22) Anmeldetag: 22.07.2008
(51) Int. Cl.: B60D 1/62

(54) **Landmaschine sowie Verfahren zu ihrer Steuerung**
Agricultural machine and method for controlling it
Machine agricole ainsi que son procédé de contrôle

(30) Priorität: 23.07.2007 DE 102007034167
(43) Veröffentlichungstag der Anmeldung: 28.01.2009
(73) Patentinhaber: Alois Pöttinger Maschinenfabrik Ges. m.b.H., 4710 Grieskirchen (AT)
(72) Erfinder: Baldinger, Martin, Dr. Dipl.-Ing., 4722 Peuerbach (AT); Edelbauer, Roland, Dipl.-Ing., 4600 Wels (AT)
(74) Vertreter: Thoma, Michael

(56) Entgegenhaltungen:
- CA-A1- 2 241 523
- DE-A1- 3 500 886
- FR-A- 2 687 115
- US-A1- 2004 024 510

## Beschreibung

Die vorliegende Erfindung betrifft eine Landmaschine, insbesondere ein an einen Schlepper anbaubares Anbaugerät wie Ladewagen, Pflug oder Heuwerbungsmaschine, mit einem Typenschild, das die Landmaschine und seine Konfiguration identifizierende Identifikationsdaten aufweist, sowie eine Verfahren zur Steuerung einer solchen Landmaschine unter Verwendung der auf dem Typenschild befindlichen Identifikationsdaten. Die Erfindung betrifft weiterhin ein Landmaschinensystem umfassend eine solche Landmaschine sowie einen Schlepper, an den die Landmaschine anbaubar ist.

Landmaschinen umfassen herkömmlicherweise am Maschinenrahmen oder einem sonstigen nicht ohne weiteres auswechselbaren Chassisteil ein Typenschild, das beispielsweise in Form eines Strichcodes oder auch Zahlen- und Buchstabenkombinationen codierte Identifikationsdaten aufweist, die die jeweilige Landmaschine selbst sowie ihre Konfiguration identifizieren. Anhand dieser Identifikationsdaten kann beispielsweise in zugehörigen Ersatzteillisten nachgeschaut werden, welche passenden Ersatzteile bei Reparatur bzw. Wartung zu verwenden sind. Je nach Maschinentyp und individueller Maschinenkonfiguration kann auch ein an der Landmaschine vorhandener Jobrechner mit entsprechender Steuerungssoftware versehen werden, beispielsweise dahingehend, dass bei einem eventuell vorhandenen Entladedosierer an einem Ladewagen in die Steuereinrichtung ein Dosierersteuerungs-Softwarebaustein eingespielt wird. Diverse andere Einstellungen und Arbeiten sind in Abhängigkeit des jeweiligen Maschinentyps und seiner Konfiguration unterschiedlich vorzunehmen.

Um die entsprechenden Daten von dem Typenschild einfach ablesen zu können, ist dieses üblicherweise an einer zumindest einigermaßen zugänglichen Stelle anzubringen, während andererseits ein geschützter Platz bevorzugt ist, um Beschädigungen des Typenschildes oder gar ein Herunterreißen zu vermeiden.

Aus der US 2004/024510 ist eine Landmaschine nach dem Oberbegriff des Anspruchs 2 bekannt, wobei ein an einen Schlepper anbaubares Anbaugerät mit einem elektronischen Datenspeicher versehen ist, in dem Steuerungsdaten für die Steuerung verschiedener Maschinenfunktionen abgelegt sind. Mittels Datenfernübertragung wie beispielsweise Satelliten- oder Mobilfunktechnologie können aus einem externen Datenspeicher einer Datenbank ergänzende Maschinensteuerungsdaten abgerufen werden, um die am Anbaugerät gespeicherten Daten zu aktualisieren oder um zusätzliche Funktionen zu ergänzen.

Hiervon ausgehend liegt der vorliegenden Erfindung die Aufgabe zugrunde, eine verbesserte Landmaschine der genannten Art, ein verbessertes Verfahren zu ihrer Steuerung sowie ein verbessertes Landmaschinensystem, umfassend eine solche Landmaschine und einen damit verbindbaren Schlepper, zu schaffen, die Nachteile des Standes der Technik vermeiden und letzteren in vorteilhafter Weise weiterbilden. Vorzugsweise soll eine verbesserte Handhabung aller vom jeweiligen Maschinentyp und seiner Konfiguration abhängenden Landmaschinenfunktionen sowie insbesondere auch eine erleichterte Steuerung und Koordinierung des Zusammenspiels zwischen Schlepper und Landmaschine erreicht werden.

Diese Aufgabe wird erfindungsgemäß durch ein Verfahren gemäß Anspruch 1, eine Landmaschine gemäß Anspruch 2 sowie ein Landmaschinensystem gemäß Anspruch 12 gelöst. Bevorzugte Ausgestaltungen der Erfindung sind Gegenstand der abhängigen Ansprüche.

Es wird also erfindungsgemäß vorgeschlagen, anstelle eines oder zusätzlich zu einem mechanischen Typenschild ein elektronisches Typenschild zu verwenden, das einen im Radiofrequenzbereich auslesbaren/beschreibbaren Transponder aufweist, auf dem die zuvor genannten Identifikationsdaten abgelegt sind. Insbesondere kann der Transponder Teil eines sogenannten RFID-, also eines Radiofrequen-zidentifikations-Systems, sein, das einen Informationsaustausch mit dem Transponder über ein im Radiofrequenzbereich arbeitendes Lese-/Schreibgerät in einem Frequenzband von etwa 100 kHz bis 3 GHz, insbesondere 134 kHz bis 2,45 GHz, vorsieht.

Durch die Verwendung eines solchen elektronischen Typenschilds mit einem im Radiofrequenzbereich arbeitenden Transponder bzw. eines RFID-Systems zeichnet sich das Typenschild durch eine extrem hohe Erstlesewahrscheinlichkeit auch ohne Sichtkontakt zum Typenschild und eine hohe Verarbeitungsgeschwindigkeit aus. Auch Verschmutzungsprobleme sind unerheblich. Insbesondere zeichnet sich ein solches RFID-System durch die weltweit einzigartige Seriennummer für jeden Transponder aus, wodurch eine hohe Fälschungssicherheit erzielt wird. Darüber hinaus ermöglicht es die Verwendung eines solchen elektronischen Typenschilds auch in einfacher Weise, die darin gespeicherten Identifikationsdaten zu ergänzen, beispielsweise einen ergänzenden Datensatz einzuspielen dann, wenn an der Landmaschine ein zusätzlicher Ausrüstungsgegenstand angebaut wird.

Vorteilhafterweise kann ein solches RFID-Typenschild dazu verwendet werden, den Anschlußvorgang der Landmaschine an den Schlepper zu vereinfachen und weitgehend zu automatisieren. Insbesondere kann in vorteilhafterweise das Anschließen der Energieversorgungsanschlüsse des Anbaugeräts an den Schlepper und die Steuerung der Energieversorgung und/oder weiterer Betriebsparameter des Anbaugeräts und/oder des Schleppers mit Hilfe eines solchen RFID-Typenschilds gesteuert werden.

An einen Schlepper anbaubare Landmaschinen weisen regelmäßig mehrere Energieversorgungsanschlüsse, insbesondere Hydraulikleitungen, aber auch Stromanschlüsse auf, die an eine entsprechende schlepperseitige Gegenanschlußvorrichtung anzuschließen sind, wobei je nach anzuschließendem Anbaugerät verschiedene Steuerungsfunktionen und Parameter einzustellen sind. Dabei können schlepperseitig mehrere Gegenanschlüsse für die Energieversorgungsanschlüsse vorgesehen sein, so daß verschiedene Anschlüsse verschieden zu belegen und/oder zu steuern sind. In Weiterbildung der Erfindung wird hierbei vorgeschlagen, die Energieversorgungsanschlüsse mit individuell programmierten Transpondern zu versehen und beim Anschließen der Energieversorgungsanschlüsse an der schlepperseitigen Gegenanschlußvorrichtung mittels eines Schreib- und/oder Lesegeräts im Transponder abgelegte Daten auszulesen und hieraus den jeweils angeschlossen Energieversorgungsanschluß zu identifizieren, und in Abhängigkeit der ausgelesenen Daten ein Anzeigeterminal anzusteuern, um anzuzeigen, welche Maschinenfunktion an welchem Schleppersteuergerät angeschlossen ist, und/oder ein entsprechendes Steuergerät des Schleppers und/oder die entsprechende Maschinenfunktion in Abhängigkeit der ausgelesenen Daten zu steuern. Insbesondere können Falschanschlüsse leicht erkannt und angezeigt werden, und/oder die Anzeige am Schlepperterminal weitergehend spezifiziert werden, etwa dahingehend, daß anstelle der Anzeige "Ventilöffnung Steuergerät 1 = 55%" die Anzeige anschlußspezifisch etwa in der Form "Ventilöffnung Knickdeichsel Ladewagen = 55%" automatisch konfiguriert wird.

Weiter vorteilhaft kann mit Hilfe der ausgelesenen Daten des Transponders eines jeweils angeschlossenen Energieversorgungsanschlusses auch in die Steuerung der Landmaschine und/oder des Schleppers eingegriffen werden.

Stehen am Schlepper mehrere Strom- und/oder Hydraulikanschlüsse zur Verfügung, kann in Abhängigkeit der ausgelesen Daten vorteilhafterweise die Anschlußbelegung erfaßt und/oder gesteuert werden. Vorteilhafterweise kann vorgesehen werden, daß mittels einer Anschlußpositionserfassungsvorrichtung erfaßt wird, welcher Energieversorgungsanschluß an welchem Gegenanschluß angeschlossen ist, wobei von der Anschlußpositionserfassungsvorrichtung mittels einer Lesevorrichtung in den Transpondern abgelegte Daten ausgelesen und die Anschlußpositionen der Energieversorgungsanschlüsse anhand der ausgelesenen Daten bestimmt werden.

Anhand der ausgelesenen Daten kann sodann eine schlepperseitige und/oder eine anbaugeräteseitige Steuervorrichtung den jeweiligen Anschluß und/oder eine entsprechende Maschinenfunktion steuern. In besonders vorteilhafter Weise wird dabei ermöglicht, daß das schlepperseitige Steuergerät für den jeweiligen Energieversorgungsanschluß vom Anbaugerät her gesteuert wird, um auf eine dort eintretende Betriebsbedingung Einfluß nehmen zu können.

Vorteilhafterweise können dabei wobei von Kommunikationsmitteln die erfaßten Anschlußpositionen der Energieversorgungsanschlüsse an der schlepperseitigen Gegenanschlußvorrichtung an einen Jobrechner (9) an der Landmaschine übermittelt werden, wobei eine schlepperseitige Steuervorrichtung zur Steuerung der Gegenanschlußvorrichtung von dem Jobrechner der Landmaschine in Abhängigkeit der übermittelten Anschlußpositionen der Energieversorgungsanschlüsse angesteuert wird.

Alternativ oder zusätzlich kann auch eine Steuerungseinrichtung am Schlepper in Abhängigkeit der ausgelesenen Daten die Steuerung der Gegenanschlußvorrichtung übernehmen und/oder darin ergänzend eingreifen.

Vorteilhafterweise kann der Transponder in verschiedenen Frequenzbändern arbeiten. Um eine von der Ausrichtung des Transponders relativ unabhängige Lesbarkeit und Beschreibbarkeit insbesondere im Nahbereich zu erreichen, kann der Transponder als Nieder- und/oder Hochfrequenz-Transponder ausgebildet sein, der eine Sende-/Empfangseinrichtung zur Datenübertragung in einem Frequenzband von etwa 130 kHz bis 14 MHz, insbesondere etwa 134 kHz bzw. 13,56 MHz, aufweist. Ein solcher Nieder- bzw. Hochfrequenz-Transponder zeichnet sich durch eine relativ geringe Richtwirkung aus.

Alternativ oder zusätzlich kann der Transponder des elektronischen Typenschilds auch als Ultrahochfrequenz-Transponder ausgebildet sein, der eine Sende-/Empfangseinrichtung zur Datenübertragung in einem Frequenzband von etwa 860 bis 925 MHz, insbesondere etwa 869 bis 915 MHz, aufweist. Ein solcher Ultrahochfrequenz-Transponder besitzt eine hohe Richtwirkung sowie eine höhere Reichweite, so dass eine gezieltere Übertragung der Daten zwischen dem Transponder und dem zugehörigen Lese-/Schreibgerät des RFID-Systems erreicht wird.

Alternativ oder zusätzlich kann das elektronische Typenschild auch einen Mikrowellen-Transponder umfassen, dessen Sende-/Empfangseinrichtung im Gigahertzbereich, vorzugsweise etwa zwischen 2 und 3 GHz, arbeitet.

Grundsätzlich kann es ausreichend sein, wenn allein der Transponder an der Landmaschine selbst vorgesehen ist, während der restliche Teil des RFID-Systems, insbesondere das Schreib-/Lesegerät mit Antenne sowie das Host-System extern, beispielsweise in der Maschinenhalle eines Service-Providers, auf dem Hof eines Maschinenbetreibers oder an anderer Stelle, an der die Identifikationsdaten benötigt werden, vorhanden ist. In Weiterbildung der Erfindung jedoch ist vorteilhafterweise an der Landmaschine selbst zumindest das im Radiofrequenzbereich arbeitende Schreib-/Lesegerät zum Beschreiben bzw. Auslesen des an der Landmaschine vorgesehenen Transponders angeordnet, so dass lediglich eine geeignete Steuereinrichtung bzw. ein Host-System an das Schreib-/Lesegerät angeschlossen werden muss, um mit dem Transponder des elektronischen Typenschilds zu kommunizieren.

Insbesondere kann die elektronische Steuereinrichtung der Landmaschine selbst mit dem elektronischen Typenschild kommunizieren, beispielsweise um dort die Maschinenhistorie, insbesondere deren Betriebsstunden, oder andere relevante Konfigurationsdaten abzulegen. Die elektronische Steuereinrichtung der Landmaschine, die üblicherweise zur Steuerung bzw. Erfassung zumindest eines Betriebsparameters der Landmaschine vorgesehen ist, kann in an sich bekannter Weise dabei einen Jobrechner mit einem diesem zugeordneten Datenspeicher aufweisen. Der Transponder des elektronischen Typenschilds ist dabei also zusätzlich zu dem Datenspeicher des Jobrechners vorgesehen, so dass in dem Transponder des elektronischen Typenschilds unabhängig vom Vorhandensein oder ggf. auch dem Austausch des Jobrechners Maschinendaten, und insbesondere resistente Identifikationsdaten, abgelegt werden können.

Der genannte Jobrechner der Landmaschine ist vorteilhafterweise mit dem zuvor genannten Schreib-/Lesegerät verbunden, um mit dem Transponder des elektronischen Typenschilds kommunizieren zu können. Vorteilhafterweise ist dabei das genannte Schreib-/Lesegerät, das im Radiofrequenzbereich mit dem Transponder kommunizieren kann, in ein mit dem Jobrechner verbundenes Bus-System eingebunden, insbesondere in ein CAN-Netzwerk, über das der Jobrechner mit weiteren Steuerungs- und/oder Erfassungskomponenten der Steuereinrichtung, wie beispielsweise Sensoren, kommuniziert.

Vorteilhafterweise sind in dem elektronischen Typenschild zusätzlich zu den reinen Identifikationsdaten, die die Landmaschine selbst, deren Modellreihe und -typ spezifizieren, auch noch weitere Daten gespeichert bzw. nachträglich einspeicherbar. Insbesondere sind in dem elektronischen Typenschild Konfigurationsdaten gespeichert, die an der Landmaschine installierte Ausrüstungsgegenstände angeben. Alternativ oder zusätzlich sind in dem elektronischen Typenschild Wartungsdaten gespeichert, die in der Vergangenheit ausgeführte und/oder zukünftig auszuführende Wartungsarbeiten und/oder vorgeschlagene Wartungsintervalle umfassen können. Weiterhin alternativ oder zusätzlich können in dem elektronischen Typenschild Support-Daten gespeichert sein, die insbesondere eine Betriebsanleitung und/oder eine Ersatzteilliste umfassen können. Auf diese Weise können die Betriebsanleitung bzw. eine Ersatzteilliste in einfacher Weise beispielsweise auf einen mit dem Jobrechner der Steuereinrichtung verbindbaren Bildschirm geholt werden.

Insbesondere können in dem elektronischen Typenschild auch Positionsdaten abgespeichert werden, die die Position der Ankupplungseinrichtung der jeweiligen Landmaschine definieren. Diese Positionsdaten können beispielsweise relativ die Position mehrerer Ankupplungselemente zueinander definieren. Alternativ oder zusätzlich können sie die Position auch absolut definieren, beispielsweise wenn mittels eines GPS-Systems beim Abstellen der Landmaschine entsprechende absolute Positionsdaten zur Verfügung stehen. Beispielsweise können beim Abkuppeln einer Landmaschine die Höhenlage und die horizontale Lage, beispielsweise eine Distanz nach rechts und links, von weiteren maschinenfesten Punkten als Positionsdaten im Typenschild abgelegt werden, so dass sie beim neuerlichen Ankuppeln in einfacher Weise ausgelesen und bereitgehalten werden können, um den Ankupplungsvorgang zu erleichtern.

Gemäß einer besonders vorteilhaften Ausführung der Erfindung kann das elektronische Typenschild zur automatischen Konfigurierung der Landmaschine selbst oder eines Schleppers genutzt werden, an den die jeweilige Landmaschine anbaubar ist. Mittels der in dem elektronischen Typenschild abgespeicherten Daten kann sozusagen eine Plug-and-Drive-Handhabung erreicht werden, die eine aufwendige manuelle Voreinstellung von Betriebsparametern oder Steuerungsfunktionen überflüssig macht. Dies kann einerseits die Landmaschine selbst betreffen dahingehend, dass beispielsweise bei Anbau eines zusätzlichen Ausrüstungsgegenstandes an der Landmaschine ein zugehöriger Datensatz in dem elektronischen Typenschild ergänzt wird. Anhand dieses Datensatzes konfiguriert sich die Steuerungseinrichtung selbsttätig, d.h. sie erkennt bei Einlesen der Identifikationsdaten vom elektronischen Typenschild einerseits das Vorhandensein einer neuen Ausrüstungskomponente und stellt dann andererseits die notwendigen Steuerungsfunktionen für die zusätzliche Ausrüstungskomponente bereit bzw. ändert vorhandene Steuerungsfunktionen entsprechend ab. Andererseits kann der in dem elektronischen Typenschild der Landmaschine abgelegte Datenbestand auch dazu genutzt werden, den Schlepper hinsichtlich relevanter Einstellungen und Betriebsfunktionen vorzukonfigurieren. Der Schlepperrechner umfasst hierzu einen Datenempfänger/-sender zum Auslesen der in dem Transponder abgelegten Daten, wobei die Datenkommunikation ggf. auch über den Jobrechner der Landmaschine und dem damit verbundenen Sende-/Empfangsgerät erfolgen kann. Die vom Schlepperrechner eingelesenen Identifikationsdaten werden von Vorkonfigurationsmitteln, beispielsweise in Form eines im Schlepper abgelegten Softwarebausteins, dazu verwendet, um relevante Voreinstellungen von Betriebsparametern des Schleppers individuell an die jeweilige Landmaschine in Abhängigkeit der im elektronischen Typenschild gespeicherten Daten anzupassen. Insbesondere kann der Schlepperrechner hierbei Kupplungs-einstellmittel umfassen, die die Ankupplungsvorrichtung des Schleppers, beispielsweise die Höhe der Ankupplungsvorrichtung an die jeweilige Landmaschine anpassen.

Die vorliegende Erfindung wird anhand bevorzugter Ausführungsbeispiele und zugehöriger Zeichnungen näher erläutert. In den Zeichnungen zeigen:
- Fig. 1:: eine schematische Seitenansicht einer Landmaschine in Form eines Ladewagens, der an einen Schlepper angebaut ist, wobei der Ladewagen ein elektronisches Typenschild gemäß einer vorteilhaften Ausführung der Erfindung aufweist,
- Fig. 2:: eine schematische Seitenansicht einer Landmaschine in Form einer Heuwerbungsmaschine mit einem elektronischen Typenschild nach einer vorteilhaften Ausführung der Erfindung,
- Fig. 3:: eine schematische Seitenansicht einer Landmaschine in Form eines Mähwerks mit einem elektronischen Typenschild nach einer vorteilhaften Ausführung der Erfindung,
- Fig. 4:: eine schematische Darstellung eines sogenannten RFID-Systems, zu dem das elektronische Typenschild der Landmaschine aus den vorhergehenden Figuren gehört,
- Fig. 5:: eine schematische Darstellung des das elektronische Typenschild bildenden Transponders,
- Fig. 6:: eine schematische Darstellung der mit Transpondern versehenen Hydraulikanschlüsse der Landmaschine aus einer der vorhergehenden Figuren sowie der Gegenanschlüsse hierfür am Schlepper, die mit Lesegeräten versehen sind, und
- Fig. 7:: ein Funktionsschaubild der Steuerung der Landmaschinen-SchlepperKombination mittels der Transponder an den Hydraulikanschlüssen.

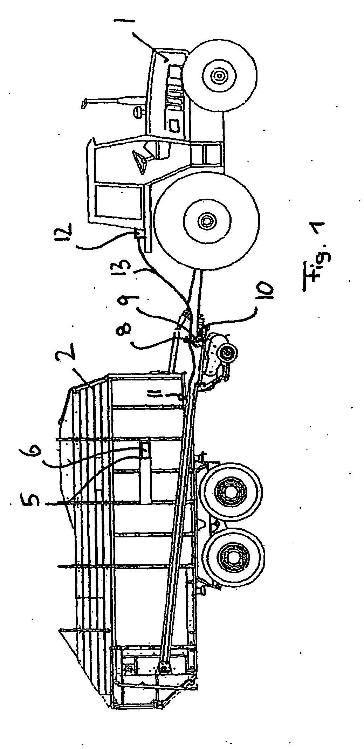

Figur 1 zeigt als Beispiel für eine Landmaschine einen Ladewagen 2, der an einen Schlepper 1 anbaubar ist. In an sich bekannter Weise weist der Ladewagen 2 einen Jobrechner 9 mit einem zugehörigen Datenspeicher 10 auf, in dem diverse Steuerprogramme abgelegt sein können, mit Hilfe derer der Jobrechner 9 diverse Betriebsfunktionen des Ladewagens 2 steuert. Der Schlepper 1 weist ebenfalls eine elektronische Steuereinrichtung auf, die den Schlepperrechner 12 umfasst, der in an sich bekannter Weise über eine Kommunikationsverbindung bzw. Datenleitung 13 mit dem Jobrechner 9 der Landmaschine kommunizieren kann.

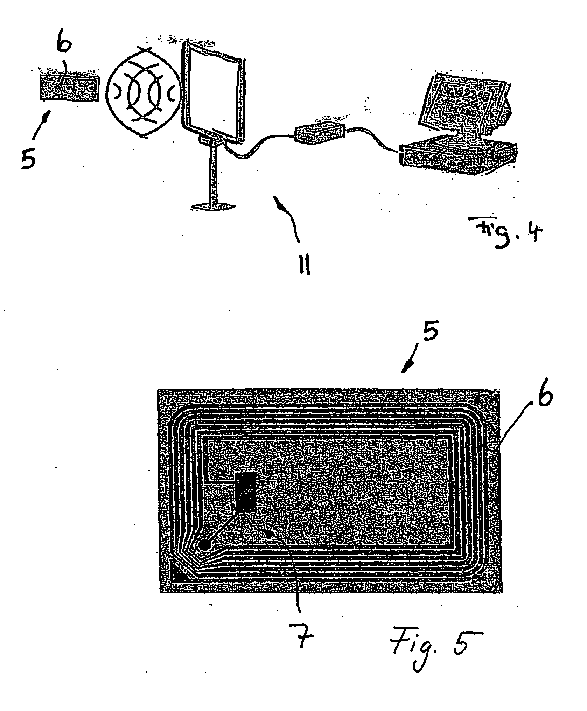

Zusätzlich zu dem Datenspeicher 10 des Jobrechners 9 ist an dem Ladewagen 2 ein elektronisches Typenschild 5 angebracht, das beispielsweise am Maschinenrahmen des Ladewagens 2 befestigt sein kann. Das Typenschild 5 umfasst dabei einen Transponder 6, wie ihn Figur 5 zeigt. Der Transponder 6 umfasst dabei eine im Radiofrequenzbereich arbeitende Sende-/Empfangseinrichtung 7, mittels derer der Transponder 6 mit einem Schreib-/Lesegerät 11 kommunizieren kann, das vorteilhafterweise ebenfalls am Ladewagen 2 vorgesehen ist und in das CAN-Netzwerk der Steuereinrichtung 8 eingebunden sein kann, über das der Jobrechner 9 mit diversen anderen Erfassungs- und/oder Steuerungsbausteinen wie Sensoren, Stellgliedern und dergleichen kommunizieren kann. Wie Figur 4 zeigt, ist der Transponder 6 somit Teil eines sogenannten RFID-Systems, der über das Schreib-/Lesegerät 11, das eine geeignete Antenne umfasst, kommunizieren kann. Das Schreib-/Lesegerät ist dabei nicht zwangsweise ausschließlich mit dem Jobrechner 9 verbunden, sonder kann ggf. über eine weitere Schnittstelle auch mit externen Rechnern verbunden werden, ggf. kann auch eine direkte Verbindung mit dem Schlepperrechner 12 vorgesehen sein. Alternativ oder zusätzlich kann der Schlepper 1 ein eigenes im Radiofrequenzbereich arbeitendes Schreib-/Lesegerät aufweisen, um direkt mit dem elektronischen Typenschild kommunizieren zu können.

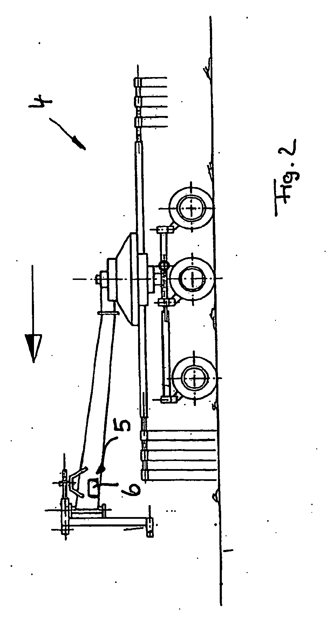

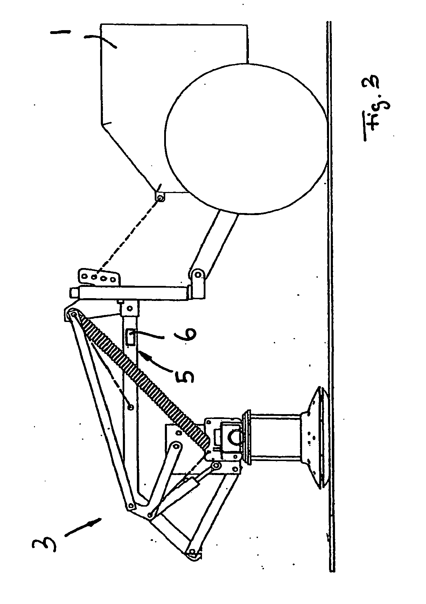

Auch wenn die Anwendung eines elektronischen Typenschilds an einem Ladewagen besonders vorteilhaft ist, können auch andere Landmaschinen, wie beispielsweise die in Figur 2 gezeigte Heuwerbungsmaschine in Form eines Kreiselschwaders oder ein Mähwerk, wie es Figur 3 zeigt, oder andere Anbaugeräte mit einem entsprechenden RFID-System bzw. einem elektronischen Typenschild 5 versehen sein.

Durch die Verwendung eines RFID-Systems an einer Landmaschine, insbesondere an einem an einen Schlepper anbaubaren Anbaugerät, sind neben den eingangs bereits erwähnten Vorteilen und Funktionen insbesondere folgende Steuerungs- und Maschinenmerkmale vorsehbar:

Die Historie der Landmaschine ist abspeicherbar. Weiterhin sind Ausrüstungszustände, Betriebsanleitungen, Ersatzteillisten und Standarddaten des Typenschildes hinterlegbar. Beim Hinterlegen der Service- und Wartungsintervalle ertönt ein Signal, wenn Intervalle überschritten werden, entweder akustisch oder auf einen Terminal. Es ist eine Wegfahrsicherung bzw. Zugangskontrolle realisierbar, evtl. auch ein Abstandsmelder. Durch aktive RFID am Hof können Geräte bei einer Flotte aufgefunden werden. Die Positionsdaten, wie Höhe, Distanz rechts, links, werden z. B. beim Verlassen des Gelenkwellenkupplers abgespeichert. Die Voreinstellungen können mittels Geräteerkennung automatisch vorgenommen werden, wenn sich der Schlepper mit seiner RFID-ID, dem sogenannten Schlüssel, an das Endgerät nähert, z. B. Deichselhöhe, Anbaubock, Turmhöhe. Das Flottenmanagement, d.h. welche Geräte sich auf dem Hof befinden und welche nicht, wird vereinfacht. Ferner ist eine Kindersicherung möglich. Daten sind mit einem herkömmlichem PDA (Handheld) auslesbar. Abläufe können automatisch gestartet werden, wenn man bei einer bestimmten Position vorbeigefahren ist. Diese können auch wieder automatisch schließen.

Das RFID ist vorteilhafterweise in ein bestehendes CAN-Netzwerk (Isobus-Protokoll) integriert. Ein Datenaustausch zwischen Jobrechner und Umwelt ist über das RFID-System möglich. Wichtige Daten werden auf dem RFID abgelegt. Diese können leicht ausgelesen werden. Service- und Wartungsdaten können einfach auf RFID geschrieben und in den Jobrechner von ungeschultem Personal übertragen werden.

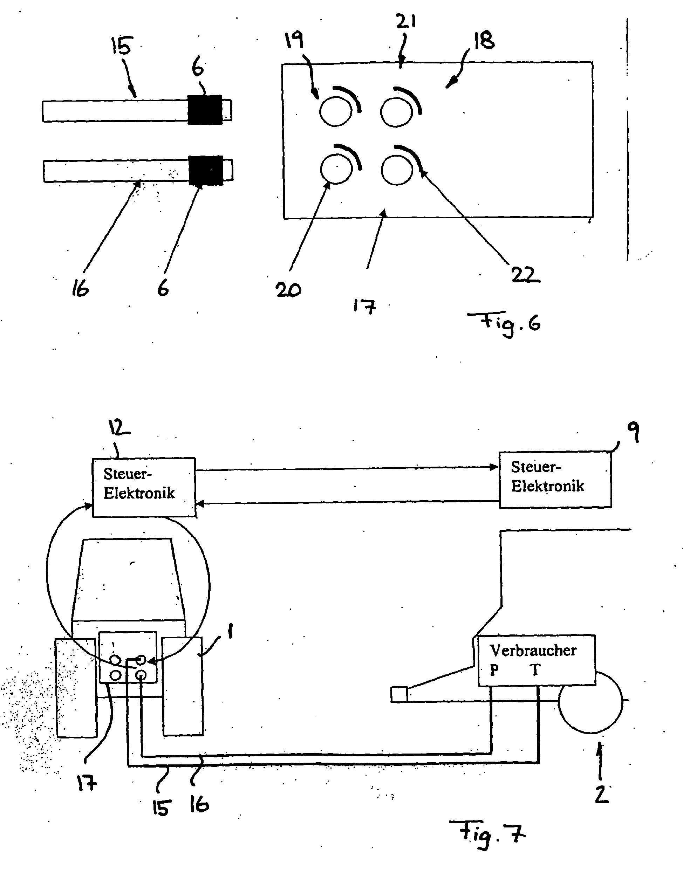

In besonders vorteilhafter Weise kann die Landmaschine 2 mittels der RFID-Tags 6 gesteuert werden, wenn diese an Energieversorgungsanschlüssen der Landmaschine angebracht werden, wie dies Fig. 6 und Fig. 7 zeigen. Dabei sind in der gezeichneten Ausführung nach Fig. 6 Hydraulikschläuche 15 und 16 mit individuellen Transpondern 6 versehen, es können jedoch auch Pneumatikanschlüsse, elektrische Stromanschlüsse oder andere Versorgungsanschlüsse in entsprechender Weise gekennzeichnet werden. Dabei sind die Transponder vorteilhafterweise in der Nähe der Anschlußenden angebracht, so daß an den Gegenanschlüssen 19 und 20 angebrachte RFID-Reader 22 jeweils den Transponder 6 auslesen, der in den jeweiligen Gegenanschluß 19 oder 20 gesteckt wird, dem der jeweilige RFID-Reader 22 zugeordnet ist.

Hierbei kann in Weiterbildung der Erfindung vorteilhafterweise folgender Steuerungsablauf realisiert werden, wie dies Fig. 7 verdeutlicht: Mittels der RFID Reader 22 am Traktor 1 wird elektronisch und berührungslos der RFID Tag 6 am Hydraulikschlauch 15 bzw. 16 gelesen. Damit wird ermittelt, dass die "Verbraucher P" - Leitung auf das Steuergerät 23a unten und die "Verbraucher T"- Leitung auf das Steuergerät 23b oben angeschlossen ist. Eine händisch einzugebende Zuordnung ist dadurch nicht mehr nötig.

Die Steuerelektronik vom Traktor 1 kann sodann die Zuordnungsinformation an die Steuerelektronik der Anbaumaschine 2 senden. Über z. B. ISOBUS sendet die Steuerelektronik der Anbaumaschine 2 einen Öffnungswunsch für das Steuergerät 23. Die Information, dass an das Steuergerät 2 "Verbraucher" angeschlossen ist, hat die Elektronik der Anbaumaschine 2 hierbei schon erhalten. Sodann kann die Steuerelektronik des Schleppers 1 das Steuergerät 23 öffnen.

Die Anwendungsmöglichkeiten sind dabei vielfältig und nicht auf das angegebene Ausführungsbeispiel beschränkt, beispielsweise ist es möglich automatisch zu erkennen, welche Maschinenfunktionen auf welchem Traktorsteuergerät angeschlossen sind. Alternativ oder zusätzlich ist die Erkennung von falsch angekuppelten Hydraulikschläuchen möglich. Wiederum alternativ oder zusätzlich ist auch eine Anzeige der angeschlossenen Funktion der Anbaumaschine am Traktorterminal möglich, beispielsweise in der Form, daß statt "Ventilöffnung Steuergerät 1 = 55%" die Anzeige "Ventilöffnung Knickdeichsel Ladewagen = 55%" ausgegeben wird.

## Patentansprüche

1. Verfahren zur Steuerung einer an einen Schlepper (1) anbaubaren Landmaschine wie Ladewagen (2), Mähwerk (3), Heuwerbungsmaschine (4) oder Bodenbearbeitungsmaschine, die mehrere Energieversorgungsanschlüsse (15, 16), insbesondere Hydraulikleitungen, aufweist, die mit jeweils einem individuellen Transponder (6) versehen und an eine schlepperseitige Gegenanschlußvorrichtung (17), die mehrere Gegenanschlüsse (19, 20) für die Energieversorgungsanschlüsse (15, 16) aufweist, anschließbar sind,
- wobei mittels einer Anschlußpositionserfassungsvorrichtung (21) erfaßt wird, welcher Energieversorgungsanschluß (15, 16) an welchem Gegenanschluß (19, 20) angeschlossen ist,
- wobei von der Anschlußpositionserfassungsvorrichtung (21) mittels einer Lesevorrichtung in den Transpondern (6a, 6b) abgelegte Daten ausgelesen und die Anschlußpositionen der Energieversorgungsanschlüsse anhand der ausgelesenen Daten bestimmt werden,
- wobei von Kommunikationsmitteln die erfaßten Anschlußpositionen der Energieversorgungsanschlüsse (15, 16) an der schlepperseitigen Gegenanschlußvorrichtung (17) an einen Jobrechner (9) an der Landmaschine übermittelt werden, und
- wobei eine schlepperseitige Steuervorrichtung zur Steuerung der Gegenanschlußvorrichtung (17) von dem Jobrechner (9) der Landmaschine in Abhängigkeit der übermittelten Anschlußpositionen der Energieversorgungsanschlüsse (15, 16) angesteuert wird.

2. Landmaschine, insbesondere an einen Schlepper (1) anbaubares Anbaugerät wie Ladewagen (2), Mähwerk (3), Heuwerbungsmaschine (4) oder Bodenbearbeitungsmaschine, mit einem elektronischen Typenschild (5), das die Landmaschine und seine Konfiguration identifizierende Identifikationsdaten aufweist, **dadurch gekennzeichnet, dass** das Typenschild (5) einen im Radiofrequenzbereich auslesbaren/beschreibbaren Transponder (6), auf dem die Identifikationsdaten abgelegt sind, aufweist, wobei mehrere Energieversorgungsanschlüsse (15, 16) mit jeweils einem Transponder (6a, 6b) versehen sind und der Jobrechner (9) Steuerungsmittel zur Steuerung einer schlepperseitigen Gegenanschlußvorrichtung (17), an die die Energieversorgungsanschlüsse (15, 16) anschließbar sind, in Abhängigkeit der aus den Transpondern (6a, 6b) der Energieversorgungsanschlüsse (15, 16) ausgelesenen Daten aufweist.

3. Landmaschine nach dem vorhergehenden Anspruch, wobei der Transponder (6) Teil eines Radiofrequenzidentifikationssystems (RFID) umfassend ein Schreib-/Lesegerät (11) mit einem Rechneranschluss ist.

4. Landmaschine nach einem der Ansprüche 2 oder 3, wobei der Transponder (6) als Nieder- und/oder Hochfrequenztransponder mit einer Sende/Empfangseinrichtung (7) zur Datenübertragung im Frequenzband von 130 kHz bis 14 MHz und/oder als Ultrahochfrequenz-Transponder mit einer Sende-/Empfangseinrichtung zur Datenübertragung im Frequenzband von 860 MHz bis 925 MHz und/oder als Mikrowellen-Transponder mit einer Sende/Empfangseinrichtung (7) zur Datenübertragung in einem Frequenzband von etwa 2 bis 3 GHz ausgebildet ist.

5. Landmaschine nach einem der Ansprüche 2 bis 4, wobei der Transponder (6) in verschiedenen Frequenzbändern betreibbar ist.

6. Landmaschine nach einem der Ansprüche 2 bis 5, wobei das elektronische Typenschild (5) zusätzlich zu dem Datenspeicher einer elektronischen Steuereinrichtung (8) zur Steuerung und/oder Erfassung zumindest eines Betriebsparameters an der Landmaschine vorgesehen ist, die einen Jobrechner (9) mit einem zugeordneten Datenspeicher (10) aufweist.

7. Landmaschine nach dem vorhergehenden Anspruch, wobei an der Landmaschine ein im Radiofrequenzbereich arbeitendes Schreib-/Lesegerät (11) zum Beschreiben und/oder Auslesen des Transponders (6) vorgesehen ist, wobei der Jobrechner (9) mit dem Schreib-/Lesegerät (11), vorzugsweise über ein BUS-System, insbesondere ein CAN-Netzwerk, verbunden ist, über das der Transponder (6) von dem Jobrechner (9) berührungslos auslesbar und/oder beschreibbar ist.

8. Landmaschine nach einem der Ansprüche 2 bis 7, wobei in dem elektronischen Typenschild (5) Konfigurationsdaten, die an der Landmaschine installierte Ausrüstungsgegenstände angeben, und/oder Wartungsdaten, die durchgeführte Wartungsarbeiten und/oder einzuhaltende Wartungsintervalle angeben, und/oder Support-Daten, die eine Betriebsanleitung und/oder eine Ersatzteilliste umfassen, und/oder Positionsdaten, die die Position von zumindest einem Ankupplungselement der Landmaschine angeben, gespeichert sind.

9. Landmaschine nach einem der Ansprüche 2 bis 8, wobei der Jobrechner (9) Konfigurationsmittel zur selbsttätigen Konfiguration zumindest einer Steuerungsfunktion der Landmaschine und/oder des Jobrechners in Abhängigkeit der in dem elektronischen Typenschild (5) der Landmaschine gespeicherten Identifikationsdaten aufweist.

10. Landmaschine nach dem vorhergehenden Anspruch, wobei die mit Transpondern versehenen Energieversorgungsanschlüsse (15, 16) Hydraulikleitungen sind.

11. Landmaschine nach einem der Ansprüche 2-10, wobei der Jobrechner (9) Kommunikationsmittel, vorzugsweise umfassend ein BUS-System, zur Kommunikation mit einer der schlepperseitigen Gegenanschlußvorrichtung (17) zugeordneten Erfassungseinrichtung (18) zur Erfassung der Anschlußpositionen der Energieversorgungsanschlüsse (15, 16) an der Gegenanschlußvorrichtung (17) aufweist und die Konfigurationsmittel derart ausgebildet sind, daß die genannten Steuermittel zur Steuerung der Gegenanschlußvorrichtung (17) in Abhängigkeit der erfaßten Anschlußposition und der aus den Transpondern (6a, 6b) der Energieversorgungsanschlüsse (15, 16) ausgelesenen Daten konfiguriert werden.

12. Landmaschinensystem umfassend eine Landmaschine (2, 3, 4) gemäß einem der Ansprüche 2 bis 11 sowie einen Schlepper (1), an den die Landmaschine anbaubar ist, wobei der Schlepper (1) einen Datenempfänger/-sender zum Datenaustausch mit dem elektronischen Typenschild (5) der Landmaschine und/oder deren Jobrechner (9) sowie einen Schlepperrechner (12) zur Steuerung von Betriebsparametern des Schleppers aufweist, wobei der Schlepperrechner Vorkonfigurationsmittel zur automatischen Vorkonfiguration zumindest eines Schlepperbetriebsparameters und/oder einer Schleppersteuerungsfunktion in Abhängigkeit der in dem elektronischen Typenschild (5) der Landmaschine gespeicherten Identifikationsdaten aufweist, wobei die Vorkonfigurationsmittel Kupplungs-Einstellmittel zur Einstellung der Anbaukupplungsvorrichtung des Schleppers (1) in Abhängigkeit der in dem elektronischen Typenschild (5) der Landmaschine gespeicherten Identifikationsdaten aufweist.

13. Landmaschinensystem nach Anspruch 12, wobei der Schlepper (1) eine Gegenanschlußvorrichtung (17) zum Anschließen der Energieversorgungsanschlüsse (15, 16) sowie ein Schreib-/Lesegerät (11) zum Beschreiben und/oder Auslesen des Transponders (6) aufweist, wobei eine Steuervorrichtung zur Steuerung zumindest eines Betriebsparameters der Landmaschine und/oder des Schleppers in Abhängigkeit der aus dem Transponder eines an der Gegenanschlußvorrichtung (17) angeschlossenen Energieversorgungsanschlusses (15, 16) ausgelesen Daten vorgesehen ist.

14. Landmaschinensystem nach dem vorhergehenden Anspruch, wobei die Gegenanschlußvorrichtung (17) des Schleppers mehrere Gegenanschlüsse (19, 20) für die Energieversorgungsanschlüsse (15, 16) aufweist, wobei eine Anschlußpositionserfassungsvorrichtung (21) zur Erfassung, welcher Energieversorgungsanschluß (15, 16) an welchem Gegenanschluß (19, 20) angeschlossen ist, vorgesehen ist, wobei die Anschlußpositionserfassungsvorrichtung (21) eine an der Gegenanschlußvorrichtung (17) vorgesehene Lesevorrichtung zum Auslesen von in den Transpondern (6a, 6b) abgelegten Daten und Auswertemittel zur Bestimmung der Anschlußpositionen der Energieversorgungsanschlüsse (15, 16) anhand der ausgelesenen Daten umfaßt, wobei Kommunikationsmittel zur Übermittlung der erfaßten Anschlußpositionen der Energieversorgungsanschlüsse (15, 16) an der schlepperseitigen Gegenanschlußvorrichtung (17) an einen Jobrechner (9) an der Landmaschine vorgesehen sind, und der an der Landmaschine vorgesehene Jobrechner (9) Steuerungsmittel zur Ansteuerung der schlepperseitigen Gegenanschlußvorrichtung (17) und/oder einer damit verbundenen Steuereinrichtung in Abhängigkeit der aus den Transpondern (6a, 6b) der Energieversorgungsanschlüsse (15, 16) ausgelesenen Daten und/oder der daraus bestimmten Anschlußpositionen aufweist.

## Claims

1. A method for controlling an agricultural machine, such as a self-loading wagon (2), a mower (3), a hay making machine (4) or a soil cultivating machine, which can be attached to a tractor (1) and which has a plurality of energy supply connections (15, 16), in particular hydraulic lines, which are each provided with an individual transponder (6) and can be connected to a respective mating connection apparatus (17) at the tractor side which has a plurality of mating connections (19, 20) for the energy supply connections (15, 16),
- wherein which energy supply connection (15, 16) is connected to which mating connection (19, 20) is detected by means of a connection position detection apparatus (21);
- wherein data stored in the transponders (6a, 6b) are read out by the connection position detection apparatus (21) by means of a reading apparatus and the connection positions of the energy supply connections are determined with reference to the data read out;
- wherein the detected connection positions of the energy supply connections (15, 16) at the mating connection apparatus (17) at the tractor side are transferred by communications means to a job computer (9) at the agricultural machine; and
- wherein a control apparatus at the tractor side for controlling the mating connection apparatus (17) is controlled by the job computer (9) of the agricultural machine in dependence on the transferred connection positions of the energy supply connections (15, 16).

2. An agricultural machine, in particular an attachment item such as a self-loading wagon (2), a mower (3), a hay making machine (4)) or a soil cultivating machine, which can be attached to a tractor (1), having an electronic specification plate (5) which has identification data identifying the agricultural machine and its configuration, **characterised in that** the specification plate (5) has a transponder (6) which can be read/written in the radio frequency range and on which the identification data are stored, with a plurality of energy supply connections (15, 16) each being provided with a transponder (6a, 6b) and with the job computer (9) having control means for controlling a mating connection apparatus (17) at the tractor side, to which the energy supply connections (15, 16) can be connected, in dependence on the data read out from the transponders (6a, 6b) of the energy supply connections (15, 16).

3. An agricultural machine in accordance with the preceding claim, wherein the transponder (6) is part of a radio frequency identification system (RFID) comprising a read/write device (11) having a computer connection.

4. An agricultural machine in accordance with either of the claims 2 or 3, wherein the transponder (6) is made as a low-frequency and/or highfrequency transponder having a transmission/reception device (7) for data transmission in the frequency band from 130 kHz to 14 MHz and/or as an ultrahigh frequency transponder having a transmission/reception device for data transmission in the frequency band from 860 MHz to 925 MHz and/or as a microwave transponder having a transmission/reception device (7) for data transmission in the frequency band from approximately 2 to 3 GHz.

5. An agricultural machine in accordance with one of the claims 2 to 4, wherein the transponder (6) can be operated in different frequency bands.

6. An agricultural machine in accordance with one of the claims 2 to 5, wherein the electronic specification plate (5) is provided at the agricultural machine in addition to the data memory of an electronic control device (8) for controlling and/or detecting at least one operating parameter, the agricultural machine having a job computer with an associated data memory (10).

7. An agricultural machine in accordance with the preceding claim, wherein a read/write device (11) working in the radio frequency range is provided at the agricultural machine for writing and/or reading the transponder (6), wherein the job computer (9) is connected to the read/write device (11), preferably via a BUS system, in particular a CAN network, via which the transponder (6) can be read and/or written non-contactlessly by the job computer (9).

8. An agricultural machine in accordance with one of the claims 2 to 7, wherein configuration data which specify attachment objects installed at the land machine and/or maintenance data which specify the maintenance work carried out and/or maintenance intervals to be observed and/or support data which include operating instructions and/or a spare parts list and/or position data which specify the position of at least one coupling element of the agricultural machine are stored in the electronic specification plate (5).

9. An agricultural machine in accordance with one of the claims 2 to 8, wherein the job computer (9) has configuration means for the automatic configuration of at least one control function of the agricultural machine and/or of the job computer in dependence on the identification data stored in the electronic specification plate (5) of the agricultural machine.

10. An agricultural machine in accordance with the preceding claim, wherein the energy supply connections (15, 16) provided with transponders are hydraulic lines.

11. An agricultural machine in accordance with one of the claims 2 to 10, wherein the job computer (9) has communications means, preferably comprising a BUS system, for communication with a detection apparatus (18) associated with the mating connection apparatus (17) at the tractor side for detecting the connection positions of the energy supply connections (15, 16) at the mating connection apparatus (17) and the configuration means are made such that the named control means for controlling the mating connection apparatus (17) are configured in dependence on the detected connection position and the data read out of the transponders (6a, 6b) of the energy supply connections (15, 16).

12. An agricultural machine system comprising an agricultural machine (2, 3, 4) in accordance with one of the claims 2 to 11 as well as a tractor (1) to which the agricultural machine can be attached, wherein the tractor (1) has a data receiver/transmitter for data exchange with the electronic specification plate (5) of the agricultural machine and/or of its job computer (9) as well as a tractor computer (12) for controlling operating parameters of the tractor, wherein the tractor computer has preconfiguration means for the automatic preconfiguration of at least one tractor operating parameter and/or of a tractor control function in dependence on the identification data stored in the electronic specification plate (5) of the agricultural machine, wherein the preconfiguration means has coupling adjustment means for adjusting the attachment coupling apparatus of the tractor (1) in dependence on the identification data stored in the electronic specification plate (5) of the agricultural machine.

13. An agricultural machine system in accordance with claim 12, wherein the tractor (1) has a mating connection apparatus (17) for connecting the energy supply connections (15, 16) as well as a read/write device (11) for writing and/or reading the transponder (6), wherein a control apparatus is provided for controlling at least one operating parameter of the agricultural machine and/or of the tractor in dependence on the data read out of the transponder of an energy supply connection (15, 16) connected to the mating connection apparatus (15, 16).

14. An agricultural machine system in accordance with the preceding claim, wherein the mating connection apparatus (17) of the tractor has a plurality of mating connections (19, 20) for the energy supply connections (15, 16), wherein a connection position detection apparatus (21) is provided for detecting which energy supply connection (15, 16) is connected to which mating connection (19, 20), wherein the connection position detection apparatus (21) includes a reading apparatus provided at the mating connection apparatus (17) for reading data stored in the transponders (6a, 6b) and evaluation means for determining the connection positions of the energy supply connections (15, 16) with reference to the data read out, wherein communications means are provided for transferring the detected connection positions of the energy supply connections (15, 16) at the mating connection apparatus (17) at the tractor side to a job computer (9) at the agricultural machine and the job computer (9) provided at the agricultural machine has control means for controlling the mating connection apparatus (17) at the tractor side and/or a control device connected thereto in dependence on the data read out from the transponders (6a, 6b) of the energy supply connections (15, 16) and/or on the connection positions determined therefrom.

## Revendications

1. Procédé pour commander une machine agricole pouvant être fixée à un tracteur (1) telle véhicule de chargement (2), faucheuse (3), machine de fenaison (4) ou machine pour le travail du sol, qui présente plusieurs branchements d'alimentation en énergie (15, 16), en particulier des conduites hydrauliques, lesquels sont dotés chacun d'un transpondeur (6) individuel et peuvent être raccordés à un dispositif de contre-branchement (17) côté tracteur, qui présente plusieurs contre-branchements (19, 20) pour les branchements d'alimentation en énergie (15, 16),
- dans lequel on enregistre au moyen d'un dispositif d'enregistrement de position de branchement (21) quel branchement d'alimentation en énergie (15, 16) est raccordé à quel contre-branchement (19, 20),
- dans lequel des données déposées dans les transpondeurs (6a, 6b) sont extraites par le dispositif d'enregistrement de position de branchement (21) au moyen d'un dispositif de lecture et les positions de branchement des branchements d'alimentation en énergie sont déterminées à l'aide des données extraites,
- dans lequel les positions de branchement enregistrées des branchements d'alimentation en énergie (15, 16) sur le dispositif de contre-branchement (17) côté tracteur sont transmises par des moyens de communication à un ordinateur de travail (9) sur la machine agricole, et
- dans lequel un dispositif de commande côté tracteur est actionné pour la commande du dispositif de contre-branchement (17) par l'ordinateur de travail (9) de la machine agricole en fonction des positions de branchement transmises des branchements d'alimentation en énergie (15, 16).

2. Machine agricole, en particulier appareil porté, pouvant être fixée à un tracteur (1) telle que véhicule de chargement (2), faucheuse (3), machine de fenaison (4) ou machine pour le travail du sol, comprenant une plaque signalétique (5) électronique, qui présente des données d'identification identifiant la machine agricole et sa configuration, **caractérisée en ce que** la plaque signalétique (5) présente un transpondeur (6) pouvant être lu/décrit dans la plage de radiofréquences sur lequel les données d'identification sont déposées, plusieurs branchements d'alimentation en énergie (15, 16) étant dotés chacun d'un transpondeur (6a, 6b) et l'ordinateur de travail (9) présentant des moyens de commande pour la commande d'un dispositif de contre-branchement (17) côté tracteur, auquel les branchements d'alimentation en énergie (15, 16) peuvent être raccordés, en fonction des données extraites des transpondeurs (6a, 6b) des branchements d'alimentation en énergie (15, 16).

3. Machine agricole selon la revendication précédente, le transpondeur (6) faisant partie d'un système d'identification de radiofréquence (RFID) comprenant un appareil d'écriture/lecture (11) avec un branchement d'ordinateur.

4. Machine agricole selon l'une quelconque des revendications 2 ou 3, le transpondeur (6) étant conçu sous forme de transpondeur à basse fréquence et/ou à haute fréquence avec un dispositif d'émission/réception (7) pour la transmission de données dans la bande de fréquences de 130 kHz à 14 MHz et/ou sous forme de transpondeur à ultrahaute fréquence avec un dispositif d'émission/réception pour la transmission de données dans la bande de fréquences de 860 MHz à 925 MHz et/ou sous forme de transpondeur à hyperfréquence avec un dispositif d'émission/réception (7) pour la transmission des données dans une bande de fréquences d'environ 2 à 3 GHz.

5. Machine agricole selon l'une quelconque des revendications 2 à 4, le transpondeur (6) pouvant être utilisé dans différentes bandes de fréquences.

6. Machine agricole selon l'une quelconque des revendications 2 à 5, la plaque signalétique (5) électronique étant prévue en supplément de la mémoire de données d'un dispositif de commande électronique (8) pour la commande et/ou l'enregistrement d'au moins un paramètre de service sur la machine agricole qui présente un ordinateur de travail (9) avec une mémoire de données (10) associée.

7. Machine agricole selon la revendication précédente, sur laquelle un appareil d'écriture/lecture (11) travaillant dans la plage de radiofréquences est prévu pour la description et/ou la lecture du transpondeur (6), l'ordinateur de travail (9) étant relié à l'appareil d'écriture/lecture (11), de préférence au moyen d'un système de BUS, en particulier un réseau CAN, par lequel le transpondeur (6) peut être lu ou décrit sans contact par l'ordinateur de travail (9).

8. Machine agricole selon l'une quelconque des revendications 2 à 7, des données de configuration, qui indiquent des objets d'équipement installés sur la machine agricole, et/ou des données de maintenance, qui indiquent des travaux de maintenance effectués et/ou des intervalles de maintenance à respecter, et/ou des données de support, qui comprennent une notice d'emploi et/ou une liste de pièces détachées, et/ou des données de position, qui indiquent la position d'au moins un élément d'attelage de la machine agricole, étant stockées dans la plaque signalétique (5) électronique.

9. Machine agricole selon l'une quelconque des revendications 2 à 8, l'ordinateur de travail (9) présentant des moyens de configuration pour la configuration automatique d'au moins une fonction de commande de la machine agricole et/ou de l'ordinateur de travail en fonction des données d'identification stockées dans la plaque signalétique (5) électronique de la machine agricole.

10. Machine agricole selon la revendication précédente, les branchements d'alimentation en énergie (15, 16) dotés de transpondeurs étant des conduites hydrauliques.

11. Machine agricole selon l'une quelconque des revendications 2 à 10, l'ordinateur de travail (9) présentant des moyens de communication, comprenant de préférence un système de BUS, pour la communication avec un dispositif d'enregistrement (18) attribué au dispositif de contre-branchement (17) côté tracteur pour l'enregistrement des positions de branchement des branchements d'alimentation en énergie (15, 16) sur le dispositif de contre-branchement (17) et les moyens de configuration étant conçus de telle sorte que lesdits moyens de commande pour la commande du dispositif de contre-branchement (17) sont configurés en fonction de la position de branchement enregistrée et des données lues à partir des transpondeurs (6a, 6b) des branchements d'alimentation en énergie (15, 16).

12. Système de machine agricole comprenant une machine agricole (2, 3, 4) selon l'une quelconque des revendications 2 à 11 et un tracteur (1), auquel la machine agricole peut être attelée, le tracteur (1) présentant un récepteur/émetteur de données pour l'échange de données avec la plaque signalétique (5) électronique de la machine agricole et/ou son ordinateur de travail (9) ainsi qu'un ordinateur de tracteur (12) pour la commande de paramètres de service du tracteur, l'ordinateur du tracteur présentant des moyens de pré-configuration pour la pré-configuration automatique d'au moins un paramètre de service de tracteur et/ou d'une fonction de commande de tracteur en fonction des données d'identification stockées dans la plaque signalétique (5) électronique de la machine agricole, les moyens de pré-configuration présentant des moyens de réglage d'accouplement pour le réglage du dispositif d'accouplement porté du tracteur (1) en fonction des données d'identification stockées dans la plaque signalétique (5) électronique de la machine agricole.

13. Système de machine agricole selon la revendication 12, le tracteur (1) présentant un dispositif de contre-branchement (17) pour le raccordement des branchements d'alimentation en énergie (15, 16) ainsi qu'un appareil d'écriture/lecture (11) pour la description et/ou la lecture du transpondeur (6), un dispositif de commande étant prévu pour la commande d'au moins un paramètre de service de la machine agricole et/ou du tracteur en fonction des données lues à partir du transpondeur d'un branchement d'alimentation en énergie (15, 16) raccordé au dispositif de contre-branchement (17).

14. Système de machine agricole selon la revendication précédente, le dispositif de contre-branchement (17) du tracteur présentant plusieurs contre-branchements (19, 20) pour les branchements d'alimentation en énergie (15, 16), un dispositif d'enregistrement de position de branchement (21) étant prévu pour enregistrer quel branchement d'alimentation en énergie (15, 16) est raccordé à quel contre-branchement (19, 20), le dispositif d'enregistrement de position de branchement (21) comprenant un dispositif de lecture prévu sur le dispositif de contre-branchement (17) pour l'extraction de données déposées dans les transpondeurs (6a, 6b) et des moyens d'analyse pour déterminer les positions de branchement des branchements d'alimentation en énergie (15, 16) à l'aide des données extraites, des moyens de communication étant prévus sur la machine agricole pour la transmission des positions de branchement enregistrées des branchements d'alimentation en énergie (15, 16) sur le dispositif de contre-branchement (17) côté tracteur à un ordinateur de travail (9), et l'ordinateur de travail (9) prévu sur la machine agricole présentant des moyens de commande pour l'actionnement du dispositif de contre-branchement (17) côté tracteur et/ou d'un dispositif de commande relié à celui-ci en fonction des données extraites des transpondeurs (6a, 6b) des branchements d'alimentation en énergie (15, 16) et/ou des positions de branchement déterminées à partir de là.
